# EUROPEAN PATENT SPECIFICATION

(11) **EP 3 793 371 B1**
(45) Date of publication and mention of the grant of the patent: **30.04.2025**
(21) Application number: 19729845.8
(22) Date of filing: 13.05.2019
(51) Int. Cl.: A23L 19/00, A23N 1/02, A23N 4/04, A23N 4/08

(54) **METHOD FOR PROCESSING STONE FRUIT**
VERFAHREN ZUR VERARBEITUNG VON STEINOBST
PROCÉDÉ DE TRAITEMENT DE FRUITS À NOYAU

(30) Priority: 15.05.2018 IT 201800005396
(43) Date of publication of application: 24.03.2021
(73) Proprietor: CFT S.p.A., 43122 Parma (IT)
(72) Inventor: CATELLI, Roberto, 43123 Parma (IT); MONTANI, Roberto, 29016 Cortemaggiore (Piacenza) (IT)
(74) Representative: Monelli, Alberto
(86) International application number: PCT/IB2019/053925
(87) International publication number: WO 2019/220306

(56) References cited:
- EP-A1- 1 380 217
- EP-A1- 2 810 568
- WO-A1-2010/071451
- WO-A1-2017/064348
- CN-A- 105 495 639
- US-A- 5 213 845
- US-A- 5 298 275

## Description

### Technical Field

The object of the present invention is a method for processing stone fruit. The invention is defined in the appended claims.

It is used in particular for producing fruit purée.

### Prior Art

An apparatus is known that envisages the use of two machines placed in series: a stone remover and a stone cleaner positioned downstream.

The stone remover comprises two counter-rotating rollers. A presser presses the fruit against the two rollers. One of the two rollers is made of rubber. The other is made of metal material and is serrated. During rotation, the serrated roller removes the flesh from the fruit until the volume of flesh around the stone is sufficiently reduced to allow the latter to be swallowed up within the rubber roller. Immediately downstream, there is a cusp-shaped deflector that identifies two slides, one that directs the flesh and one for the evacuation of the stone. CN 105 495 639 A discloses a fruit and vegetable processing beating device capable of peeling, beating and separating mango at the same time.

The stone with which a part of the flesh is still associated is then introduced into the aforementioned stone cleaning device. Such device comprises a centrifugal machine with blades that pushes the stones against a sieve for recovering a further part of the flesh. The purée obtained from the flesh closest to the stone is more fibrous and has a slightly different colour. It is of poorer quality and is usually mixed in reduced percentages with the purée obtained directly from the stone remover.

A drawback of such constructive solution is connected with the fact that during use the rubber roller gets worn, releasing microscopic fragments of rubber that due to the minuscule dimensions are not withheld by any filters positioned downstream. This compromises the product quality. Furthermore, the production takes place cold and therefore the product is very sensitive to the production time (including stop time in storage tanks); the longer the time, the higher the oxidation (with negative consequences on the quality).

### Aim of the invention

The object of the present invention is to propose a method for processing fruit that allows the drawbacks illustrated above to be overcome.

In particular, an aim of the present invention is to provide a method hat allows the product quality to be optimised. The stated technical task and specified objects are substantially achieved a method comprising the technical features disclosed in one or more of the appended claims.

### Brief description of the drawings

Further characteristics and advantages of the present invention will become more apparent from the following indicative and therefore non-limiting description of a method as illustrated in the appended drawings, in which:

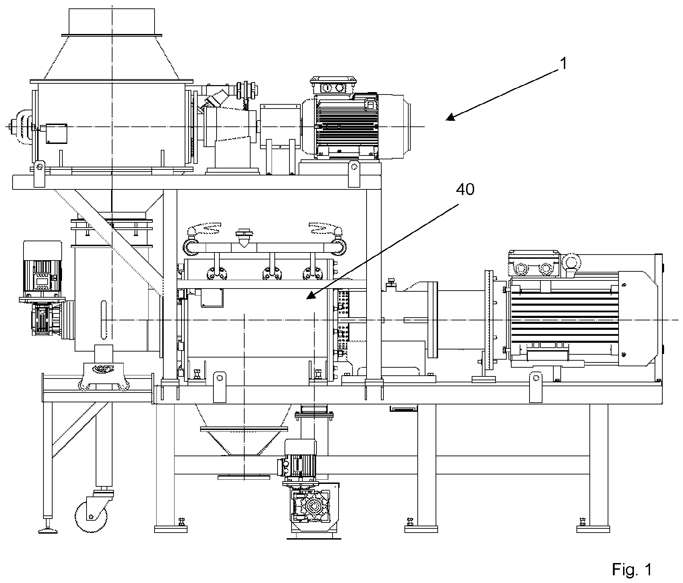

- figure 1 shows a lateral view of an apparatus that can be used in the method according to the present invention;

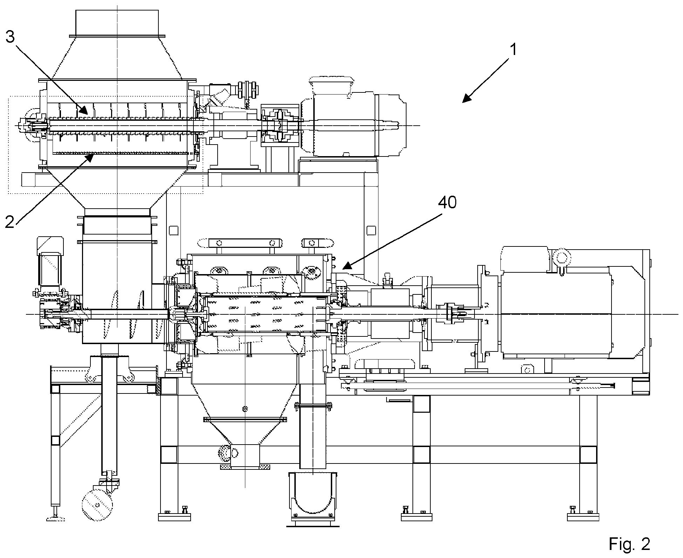

- figure 2 shows a sectional view of figure 1;

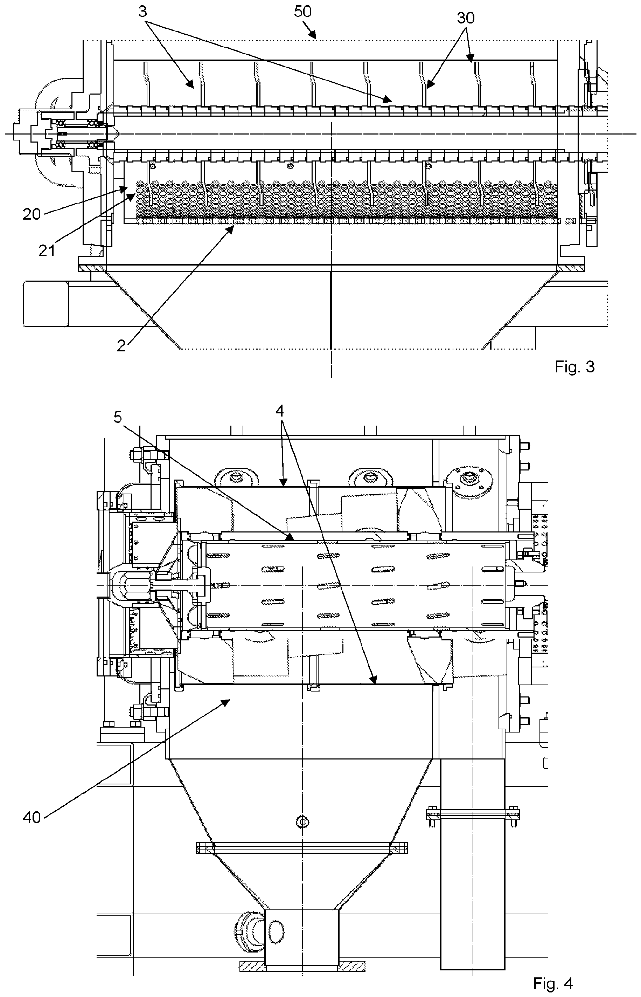

- figures 3 and 4 show enlarged details of figure 2;

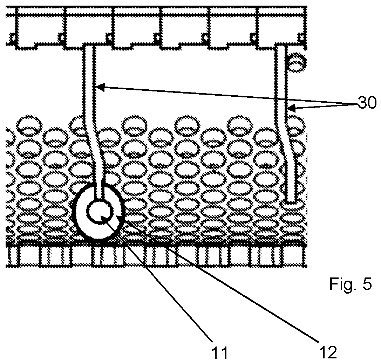

- figure 5 highlights a step of the method according to the present invention.

### Detailed description of preferred embodiments of the invention

In the appended figures the reference number 1 indicates a processing apparatus, per se not part of the claimed invention, for fruit with a central stone and flesh surrounding the stone. For example, such fruit could be peach, apricot or mango.

The apparatus 1 comprises a rotating element 3 and a casing 2 inside which said rotating element 3 rotates (together they define the stone remover that allows the flesh to be separated from the stone). Preferably the rotating element 3 is coaxial with the casing 2. The casing 2 is static.

The casing 2 comprises at least one outlet hole 21 for letting out the stone and the flesh detached from the stone. The hole 21 is advantageously placed on a lower portion of the casing 2 in order to facilitate the outlet by gravity. Advantageously there are various holes 21, preferably alongside each other. The following description with reference to said at least one hole 21 can be advantageously repeated for one or more of the remaining holes 21.

At the top the casing 2 has an opening 50 for the inlet of the fruit.

Advantageously, upstream of the casing 2 there may be a rotary star valve; it allows the introduction of the fruit, at the same time limiting the inlet of air. The rotating element 3 is suitable to remove the flesh attached to the stone and to draw in rotation the fruit placed inside the casing 2 pushing it by centrifugal force against the casing 2. The rotating element 3 comprises one or more blade elements 30.

The blade element 30 rotates inside the casing 2 maintaining a radial distance from said casing 2 such as to allow the stone 11 to remain near the casing 2 without coming into contact with the blade element 30. Typically, the blade element 30 has a radial distance from the casing 2 that is variable according to the geometry of the element to be treated. By way of non-limiting example, such radial distance could be comprised between 3 and 4 centimetres. In a particular constructive solution the rotary element 3 and the casing 2 could not be coaxial. The blade element 30 is advantageously serrated (preferably on the outer edge). In an exemplified but non-limiting solution, the blade element 30 extends radially along a length comprised between 50% and 80% of the radial distance between the casing 2 and a base of the blade element 30.

The apparatus 1 further comprises a means 40 for separating the stone from the flesh already detached from the stone. Such separation means 40 is placed downstream of the casing 2. Appropriately the separation means 40 comprises a first refining device comprising an impeller 5 that rotates in a sieve 4 and pushes the flesh through the sieve 4. The stones are instead retained by the sieve 4. The sieve 4 can comprise holes having a diameter comprised between 5 and 10 millimetres (or however having a passage section comprised between 19.5 mm² and 78.5 mm²).

The separation means 40 also contributes to separating from the stone at least a part of the flesh attached to the stone. On this point, the propeller 5 is bladed and draws in rotation the stone 11 pushing it (due to the effect of the radial thrust imposed by the blade and by centrifugal effect) against the sieve 4 to determine a further detachment of flesh still attached to the stone 11.

The object of the present invention is also a method for processing fruit 10 with a central stone 11 and flesh 12 surrounding the stone (as indicated previously for example the fruit could be peach, apricot, mango). Appropriately the method can be implemented by a fruit processing apparatus 1 having one or more of the characteristics described hereinabove.

The method comprises the step of positioning the fruit inside a casing 2 in which a rotating element 3 rotates. The rotating element 3 comprises one or more blade elements 30 (in the preferred solution they are arranged radially starting from a central rotor). In an exemplified solution the rotating element 3 rotates at a speed comprised between 600 and 800 revolutions per minute, preferably at 700 rpm. The casing 2 comprises an outlet hole 21.

The method comprises the step of removing (detaching) from the stone 11 at least a part of the flesh 12 attached to the stone 11. This comprises the step of pushing by centrifugal force the fruit against the casing 2 and bringing said rotating element 3 (in particular the blade element 30) into contact with the flesh 12 until the stone can pass through said at least one outlet hole 21. The rotating element 3 coming into contact with the flesh 12 of the fruit nibbles (cuts or however minces) the fruit so that each individual fruit reduces its volume. When the dimension is sufficiently reduced the fruit can be evacuated from the casing 2 through said at least one outlet hole 21. Typically this happens by gravity. When the stone is evacuated from the casing 2 it may still be attached to some flesh. This can also be removed through subsequent processing (which will be explained below).

The step of removing the flesh 12 from the stone 11 comprises the step of positioning by centrifugal effect the stone 11 between the casing 2 and an imaginary circumference travelled by the outer diameter of the blade element 30. The blade element 30 removes at least a part of the flesh attached to the stone 11 without coming into contact with the stone 11.

The blade element 30 rotates inside the casing 2 maintaining a radial distance from said casing 2 such as to allow the stone 11 to remain near the casing 2 without coming into contact with the blade element 30. Typically, the blade element 30 has a radial distance from the casing 2 that is variable according to the geometry of the element to be treated. The blade element 30 is advantageously serrated (preferably on the outer edge). The description with reference to one blade element 30 may also be repeated for the other blade elements 30. Appropriately the casing 2 and said one or more blade elements 30 are removably connected. This allows them to be replaced as a function of the type of product whose stone is to be removed. In fact, the radial distance of the blade element 3 from the casing, like the geometry of said at least one outlet hole 21, must be carefully selected.

In fact, it is important to find the right geometric balance of the rotating element 3 and the casing 2. In fact, if the blade element 30 ground part of the stone, the purée obtained would be compromised by the bitter taste of the stone. Vice versa, if an excessive quality of flesh were left on the stone, there would be excessive waste (or slower processing because of the need to recover large volumes of flesh later, with the risk that it has oxidised more in the meantime).

Said at least one outlet hole comprises a slit that allows the passage of a round object with a diameter of 30 millimetres.

Appropriately said at least one outlet hole 21 comprises a slot that extends along a curved wall 20 of the casing 2 defining a half-moon.

Preferably said at least one outlet hole 21 comprises a slit having a width comprised between 30 and 40 millimetres. The slit therefore has a longitudinal prevalent extension. The width being appropriately measured orthogonally to such longitudinal line.

In the preferred solution the casing 2 and the rotating element 3 are made of metal. More generally the fruits inside said casing do not come into contact with the rubber elements. Therefore, effective stone removal can also be obtained in the absence of rubber portions that swallow up the stone exploiting the elasticity thereof.

The method allows a semi-processed product to be obtained downstream of the casing 2 comprising:
- the flesh 12 that has been separated from the stone 11; and
- the stone 11 (to which residues of flesh can still in turn be attached).

Such semi-processed product is therefore a mush (the ground flesh) in which the stones are present.

The method further comprises the step of making said semi-processed product pass through a sieve 4 that retains the stone 11 allowing the passage of the flesh 12.

The step of making said semi-processed product transit through the sieve 4 comprises the step of making the semi-processed product pass through a first refining device comprising an impeller 5 that rotates in the sieve 4 and pushes the flesh through the sieve 4. The stones are instead retained by the sieve 4. The propeller 5 can for example rotate at a speed comprised between 800 and 1000 rpm, preferably at 900 rpm. The sieve can comprise holes having a diameter comprised between 5 and 10 millimetres (or however having a passage section comprised between 19.5 mm² and 78.5 mm²).

The propeller 5 is bladed and draws in rotation the stone 11 pushing it (due to the effect of the radial thrust imposed by the blade and by centrifugal effect) against the sieve 4 to determine a further detachment of flesh still attached to the stone 11. Appropriately the first refining device is placed at least in part below said casing 2. This allows a column-like extension of the apparatus 1.

The method can possibly envisage the step of making the useful product transit at the outlet from the first refiner (the one that crosses the sieve 4) to a second refining device. This could be useful for some types of products. For example, for retaining some types of skins. By way of example there are white nectarines that are distinguished by white flesh and red skin. In that case if the skin ended up in the purée it would compromise the colour thereof. The second refining device could therefore be used to prevent such drawback.

Downstream of the first refining device (and also of the second one if provided) there is a purée cooking system. This may be for example of the type described in EP2022342. Advantageously it comprises a recirculation system inside which heated purée circulates. The purée at the inlet then comes into contact straight away with a significant mass of already heated purée and therefore can be heated extremely quickly. Furthermore the first or the second refining device is located immediately above the inlet of the purée into the recirculation system. In this way the hot vapours coming from the recirculation system rise towards the first or second refining device allowing the oxidation of the product already upstream to be reduced, to heat it (as well as yielding the aroma of such vapours to the product without dispersing it).

The present invention achieves important advantages. First of all, it allows the fruit stone to be removed without the use of rubber rollers that by coming into contact with the product get worn releasing small particles that end up in the final product (intended to be eaten). Furthermore, the apparatus, which per se is not part of the claimed subject-matter, has a notable operating speed and this allows the exposure of the semi-processed product to oxidation to be minimised.

## Claims

1. A method for processing fruit that has a central stone (11) and flesh (12) surrounding the stone, said method comprising the steps of:
- positioning the fruit inside a casing (2) in which a rotating element (3) rotates, the casing (2) comprising at least one outlet hole (21) for letting out the stone and the flesh detached from the stone;
- removing from the stone (11) at least a part of the flesh (12) attached to the stone (11);
the step of removing from the stone (11) at least a part of the flesh (12) attached to the stone (11) comprising the step of pushing the fruit by centrifugal force against the casing (2) and bringing said rotating element (3) into contact with the flesh (12) until the stone (11) manages to pass through said at least one outlet hole (21);
the step of removing the flesh (12) from the stone (11) comprising the step of positioning by centrifugal effect the stone (11) between the casing (2) and an imaginary circumference travelled by the outer diameter of a blade element (30) being part of the rotating element (3); said blade element (30) removing at least a part of the flesh attached to the stone (11) without coming into contact with the stone (11);
said method also comprising the steps of:
-obtaining a semi-processed product downstream of the casing (2) comprising the stone (11) and the flesh (12) that was separated from the stone (11);
-making said semi-processed product pass through a sieve (4) that retains the stone (11) allowing the passage of the flesh (12).

2. The method according to claim 1, **characterised in that** said blade element (30) rotates inside the casing (2) maintaining a radial distance from said casing (2) such as to allow the stone (11) to remain near the casing (2) without coming into contact with the blade element (30).

3. The method according to claim 1 or 2, **characterised in that** said at least one outlet hole (21) comprises a slot that extends along a curved wall (20) of the casing (2) defining a half-moon.

4. The method according to any one of the preceding claims, **characterised in that** said at least one outlet hole (21) comprises a slit having a width comprised between 30 and 40 millimetres.

5. The method according to any one of the previous claims, **characterised in that** said casing (2) and said rotating element (3) are made of metal.

6. The method according to any one of the preceding claims, **characterised in that** the step of making said semi-processed product transit through the sieve (4) comprises the step of making the semi-processed product pass through a first refining device comprising an impeller (5) that rotates in the sieve (4) and pushes the flesh through the sieve (4), the stones being retained by the sieve (4).

7. The method according to claim 6, **characterised in that** said impeller (5) is bladed and draws in rotation the stone (11) pushing it against the sieve (4) to determine a further detachment of flesh still attached to the stone (11).

## Patentansprüche

1. Verfahren zur Verarbeitung von Obst mit einem mittleren Stein (11) und Fruchtfleisch (12), das den Stein umgibt, wobei das Verfahren die folgenden Schritte umfasst:
- Positionieren des Obsts in einem Gehäuse (2), in dem sich ein rotierendes Element (3) dreht, wobei das Gehäuse (2) mindestens ein Auslassloch (21) zum Auslassen des Steins und des vom Stein gelösten Fruchtfleischs umfasst;
- Entfernen von mindestens einem Teil des am Stein (11) haftenden Fruchtfleischs (12) vom Stein (11),
wobei der Schritt zum Entfernen von mindestens einem Teil des am Stein (11) haftenden Fruchtfleischs (12) vom Stein (11) den Schritt zum Drücken des Obsts durch Zentrifugalkraft gegen das Gehäuse (2) und zum Bringen des rotierenden Elements (3) in Kontakt mit dem Fruchtfleisch (12), bis es dem Stein (11) gelingt, durch das mindestens eine Auslassloch (21) zu dringen, umfasst,
wobei der Schritt zum Entfernen des Fruchtfleischs (12) vom Stein (11) den Schritt zum Positionieren des Steins (11) durch Zentrifugalwirkung zwischen dem Gehäuse (2) und einem imaginären Umfang umfasst, der vom Außendurchmesser eines Messerelements (30) befahren wird, das Teil des rotierenden Elements (3) ist, wobei das Messerelement (30) mindestens einen Teil des am Stein (11) haftenden Fruchtfleischs entfernt, ohne mit dem Stein (11) in Kontakt zu kommen,
wobei das Verfahren auch die folgenden Schritte umfasst:
- Erhalten eines halb verarbeiteten Produkts nach dem Gehäuse (2), umfassend den Stein (11) und das Fruchtfleisch (12), das vom Stein (11) getrennt wurde;
- Bewirken, dass das halb verarbeitete Produkt durch ein Sieb (4) geführt wird, das den Stein (11) zurückhält und den Durchgang des Fruchtfleischs (12) erlaubt.

2. Verfahren nach Anspruch 1, **dadurch gekennzeichnet, dass** sich das Messerelement (30) im Gehäuse (2) dreht und einen radialen Abstand vom Gehäuse (2) beibehält, sodass dem Stein (11) erlaubt wird, in der Nähe des Gehäuses (2) zu bleiben, ohne mit dem Messerelement (30) in Kontakt zu kommen.

3. Verfahren nach Anspruch 1 oder 2, **dadurch gekennzeichnet, dass** das mindestens eine Auslassloch (21) einen Spalt umfasst, der sich entlang einer gekrümmten Wand (20) des Gehäuses (2) erstreckt, die einen Halbmond definiert.

4. Verfahren nach einem der vorhergehenden Ansprüche, **dadurch gekennzeichnet, dass** das mindestens eine Auslassloch (21) einen Schlitz umfasst, aufweisend eine Breite, die zwischen 30 und 40 Millimetern enthalten ist.

5. Verfahren nach einem der vorhergehenden Ansprüche, **dadurch gekennzeichnet, dass** das Gehäuse (2) und das rotierende Element (3) aus Metall bestehen.

6. Verfahren nach einem der vorhergehenden Ansprüche, **dadurch gekennzeichnet, dass** der Schritt zum Bewirken, dass das halb fertige Produkt durch das Sieb (4) verläuft, den Schritt zum Bewirken, dass das halb fertige Produkt durch eine erste Abscheidevorrichtung geführt wird, die ein Laufrad (5) umfasst, das sich im Sieb (4) dreht und das Fruchtfleisch durch das Sieb (4) drückt, wobei die Steine vom Sieb (4) zurückgehalten werden, umfasst.

7. Verfahren nach Anspruch 6, **dadurch gekennzeichnet, dass** das Laufrad (5) mit Schaufeln versehen ist und den Stein (11) in Drehung versetzt, um ihn gegen das Sieb (4) zu drücken, sodass eine weitere Ablösung von noch am Stein (11) haftendem Fruchtfleisch bewirkt wird.

## Revendications

1. Procédé de traitement de fruits qui ont un noyau central (11) et de la pulpe (12) entourant le noyau, ledit procédé comprenant les étapes de :
- positionner le fruit à l'intérieur d'un logement (2) dans lequel tourne un élément rotatif (3), le logement (2) comprenant au moins un trou de sortie (21) pour laisser sortir le noyau et la pulpe détachée du noyau ;
- enlever du noyau (11) au moins une partie de la pulpe (12) attachée au noyau (11) ;
l'étape consistant à enlever du noyau (11) au moins une partie de la pulpe (12) attachée au noyau (11) comprenant l'étape consistant à pousser le fruit par force centrifuge contre le logement (2) et à amener ledit élément rotatif (3) en contact avec la pulpe (12) jusqu'à ce que le noyau (11) parvienne à passer à travers ledit au moins un trou de sortie (21) ;
l'étape consistant à enlever la pulpe (12) du noyau (11) comprenant l'étape consistant à positionner par effet centrifuge le noyau (11) entre le logement (2) et une circonférence imaginaire parcourue par le diamètre extérieur d'un élément de lame (30) faisant partie de l'élément rotatif (3) ; ledit élément de lame (30) enlevant au moins une partie de la pulpe attachée au noyau (11) sans entrer en contact avec le noyau (11) ;
ledit procédé comprenant également les étapes de :
- obtenir un produit semi-transformé en aval du logement (2) comprenant le noyau (11) et la pulpe (12) qui a été séparée du noyau (11) ;
- faire passer ledit produit semi-transformé à travers un tamis (4) qui retient le noyau (11) permettant le passage de la pulpe (12).

2. Procédé selon la revendication 1, **caractérisé en ce que** ledit élément de lame (30) tourne à l'intérieur du logement (2) en maintenant une distance radiale par rapport audit logement (2) de manière à permettre au noyau (11) de rester à proximité du logement (2) sans entrer en contact avec l'élément de lame (30).

3. Procédé selon la revendication 1 ou 2, **caractérisé en ce que** ledit au moins un trou de sortie (21) comprend une fente qui s'étend le long d'une paroi incurvée (20) du logement (2) définissant une demi-lune.

4. Procédé selon l'une quelconque des revendications précédentes, **caractérisé en ce que** ledit au moins un trou de sortie (21) comprend une encoche ayant une largeur comprise entre 30 et 40 millimètres.

5. Procédé selon l'une quelconque des revendications précédentes, **caractérisé en ce que** ledit logement (2) et ledit élément rotatif (3) sont en métal.

6. Procédé selon l'une quelconque des revendications précédentes, **caractérisé en ce que** l'étape consistant à faire passer ledit produit semi-transformé à travers le tamis (4) comprend l'étape consistant à faire passer le produit semi-transformé à travers un premier dispositif de raffinage comprenant une roue (5) qui tourne dans le tamis (4) et pousse la pulpe à travers le tamis (4), les noyaux étant retenus par le tamis (4).

7. Procédé selon la revendication 6, **caractérisé en ce que** ladite roue (5) est munie de pales et entraîne en rotation le noyau (11) en la poussant contre le tamis (4) pour déterminer un ultérieur détachement de pulpe encore attachée au noyau (11).
